# EUROPEAN PATENT SPECIFICATION

(11) **EP 1 041 329 B1**
(45) Date of publication and mention of the grant of the patent: **03.12.2003**
(21) Application number: 00106750.3
(22) Date of filing: 29.03.2000
(51) Int. Cl.: F16K 31/06, F15B 13/044, F15B 19/00

(54) **Control device for proportional solenoid valve**
Steuervorrichtung für ein proportionales, elektromagnetisches Ventil
Dispositif de commande pour soupape magnétique proportionnelle

(30) Priority: 30.03.1999 JP 9005699
(43) Date of publication of application: 04.10.2000
(73) Proprietor: AISIN SEIKI KABUSHIKI KAISHA, Kariya City Aichi Pref. (JP)
(72) Inventor: Haneda, Yoshitomi, Anjo-shi, Aichi-ken (JP); Terakawa, Tomomitsu, Anjo-shi, Aichi-ken (JP); Oda, Naochika, Gamagori-shi, Aichi-ken (JP); Naito, Takao, Nagoya-shi, Aichi-ken (JP)
(74) Representative: Leson, Thomas Johannes Alois, Dipl.-Ing.

(56) References cited:
- DE-A- 4 423 102
- DE-A- 19 724 076
- US-A- 4 662 605
- PATENT ABSTRACTS OF JAPAN vol. 007, no. 145 (M-224), 24 June 1983 (1983-06-24) & JP 58 057505 A (HITACHI KENKI KK), 5 April 1983 (1983-04-05)

## Description

### BACKGROUND OF THE INVENTION

### [Field of the Invention]

The present invention is directed to a control device for a proportional solenoid valve, and in particular to a control device which makes a proportional solenoid valve free from the affection of its hysteretic characteristics.

### [Prior Art]

A conventional control device of such a type is disclosed in, for example, Japanese Patent Laid-open Print No.Hei.10-198431 published in 1998 without examination.

In the conventional device, a microprocessor compares a target flow value and an actual flow value and calculates a dither amount exceeding the hysteresis amount of driving current for a proportional control valve. When a dither amount calculate switch is turned on, dither amount calculation processing is executed and after the proper dither amount is calculated, based on this dither amount, the control of dither amount is performed. When the dither amount calculation switch is turned off, the dither amount is controlled without being initialized.

In the aforementioned device, no upper limit and lower limit of the hysteresis of the proportional solenoid valve are set or designed, which results in that the dither amplitude is always set to exceed the hysteresis of the proportional solenoid valve. On the other hand, as the hysteresis of the proportional solenoid valve which is to be eliminated becomes smaller, the dither amplitude becomes larger. Thus, in an extreme case, the dither amplitude may become very large, which causes the amplitude of the proportional solenoid valve to increase, resulting in that the durability of the proportional solenoid valve is affected. In addition, the operating amount of the proportional solenoid valve is set to be larger than the designed one due to the increased dither amount, which causes the flow control established by the proportional solenoid valve malfunctioning, thereby lowering the reliability of the proportional solenoid valve.

Thus, a need exists to remove the affection of hysteresis from the proportional solenoid valve without lowering the durability and reliability thereof.

Further, US 4,662,605 discloses a pressure regulating spool valve according to the preamble of claim 1.

Additionally, document DE 44 23 102 A1 discloses a method for driving of switching solenoids or proportional solenoids for regulating of proportional valves to lower the hysteresis over the whole regulation range.

The present invention has been developed to solve the drawbacks of the prior art noted above. This is achieved by a control device as defined in claim 1.

Advantageous further developments are set out in the respective dependent claims.

In accordance with a first aspect of the present invention, the hysteresis can be retained or held between the first predetermined value and the second predetermined value. Thus, despite of deviations of the parts and aging change of the proportional solenoid valve, the proportional solenoid valve becomes-as possible-free from hysteresis affection. In addition, as the second predetermined value, the lower limit of the hysteresis is employed, which prevents the dither amplitude from becoming extreme large, thereby restricting lowering the durability of the proportional solenoid valve. Moreover, the amplitude of the proportional solenoid valve fails to be larger than an operable amount thereof, with the result that no lowering the reliability of the proportional solenoid valve becomes possible.

In accordance with a second aspect of the present invention, setting the first predetermined value at a so-called inflection point of the hysteresis curve at which the hysteresis makes a drastic change relative to the amplitude of the proportional solenoid valve, resulting in that it becomes possible to make the amplitude of the proportional solenoid valve as small as possible and to make the hysteresis stable value from which an extremely increase fails to occur in drastic.

In accordance with a third aspect of the present invention, the lower limit of the hysteresis as the second predetermined value is obtained from the axial length of the spool and the diameter of the port, with the result that closing the port by the spool fails to be prevented. Thus, the proportional solenoid valve becomes more reliable.

The above and other objects, features and advantages of the present invention will be more apparent and more readily appreciated from the following detailed description of a preferred exemplary embodiment of the present invention, taken in connection with the accompanying drawings, in which;
FIG.1 illustrates a schematic diagram of an automatic clutch system including a control device in accordance with the present invention which is used for controlling a proportional solenoid valve;
FIGs.2, 3, and 4 each of which illustrates a vertical cross-sectional view of a principal portion of the proportional solenoid valve which takes different positions;
FIG.5 illustrates a graph showing a relationship between driving current and hysteresis;
FIG.6 illustrate a graph representing a relationship between amplitude of the proportional solenoid valve and hysteresis;
FIG.7 illustrates a circuit diagram for dither amplitude correction of the control device;
FIG.8 illustrates an enlarged view of FIG . 3;
FIG.9 illustrates a flowchart which provides a control of the proportional solenoid valve; and
FIG.10 illustrates a flowchart of a sub-routine of the control shown in FIG.9.

### DETAILED DESCRIPTION OF THE PRESENT INVENTION

A preferred embodiment of the present invention will be described hereinafter in detail with reference to the accompanying drawings.

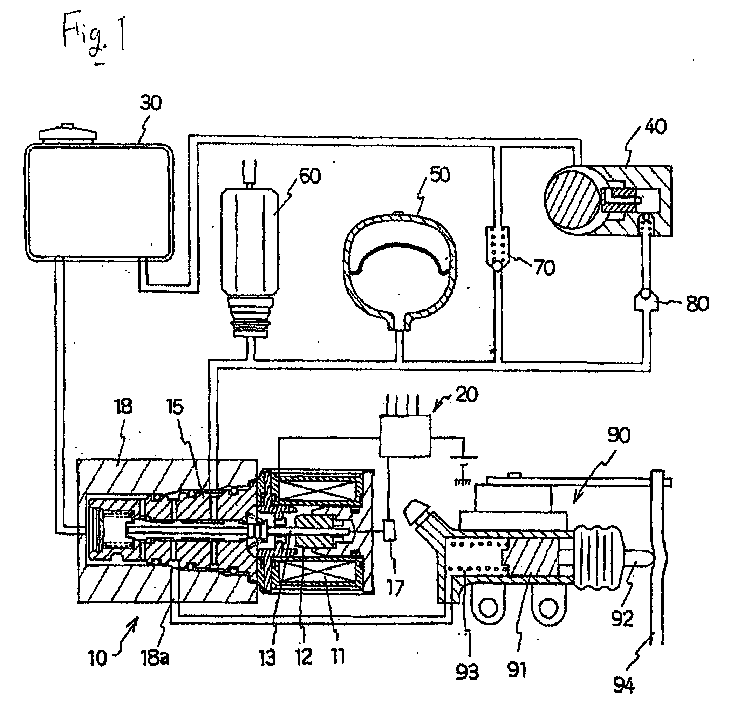

First of all, with reference to FIG.1, there is illustrated a schematic diagram of a vehicular automatic clutch system in which is employed a proportional linear valve 10 in accordance with an embodiment of the present invention.

The vehicular automatic clutch system includes the proportional solenoid valve 10, a reservoir 30, a motor driven pump 40, an accumulator 50, a pressure switch 60, a relief valve 70, a check valve 80, a clutch release cylinder 90, and a control device 20.

The proportional linear valve 10 has a main body 18 in which a cylinder 15 and a spool 14 are provided. The spool 14 is movable whose stroke depends on a driving current applied to proportional linear valve 10. The reservoir 30 reserves therein an amount of fluid. The motor driven pump 40 feeds the fluid to the proportional solenoid valve 10 after pressurizing the fluid. The accumulator 50 accumulates the fluid pressure between the motor driven pump 40 and the proportional solenoid valve 10. The pressure switch 60 turns on and off the motor driven pump 40 depending on the fluid pressure between the motor driven pump 40 and the proportional solenoid valve 10. The relief valve 70 is set to drain the fluid between the motor driven pump 40 and the accumulator 50, when the pressure thereof exceeds a predetermined value, to a portion between the motor driven pump 40 and the reservoir 30. The check valve 80 allows the fluid to flow only from the motor driven pump 40 to the proportional solenoid valve 10. The clutch release cylinder 90 is operated depending on the fluid pressure outputted from the proportional solenoid valve 10. The control device 20 controls the operation of the proportional solenoid valve 10.

The proportional solenoid valve 10 has the main body 18 in which the cylinder 15 is provided. In the cylinder 15, the spool 14 is fitted so as to be movable in the axial direction. When a solenoid coil 11 of the proportional solenoid valve 10 is energized, a movable core 12 moves together with a push rod 13 in the leftward direction in FIG.1, which causes the spool 14 to displace, with the result in switching each fluid communication between the proportional solenoid valve 10 and each of ports. Such switching operations regulate or adjust the fluid issued from an output port 15b to the clutch release cylinder 90.

The clutch release cylinder 90 has a piston 91 and a rod 92 which is connected thereto. The piston 91 defines a pressure chamber 93 in the clutch release cylinder 90 which is in fluid communication with the output port 15b of the proportional solenoid valve 10. When the fluid pressure applied from the output port 15b to the pressure chamber 93 becomes high, the piston 91 is brought into movement, which causes the rod 92 to push a lever 94, thereby switching engagement and disengagement of the clutch (not shown).

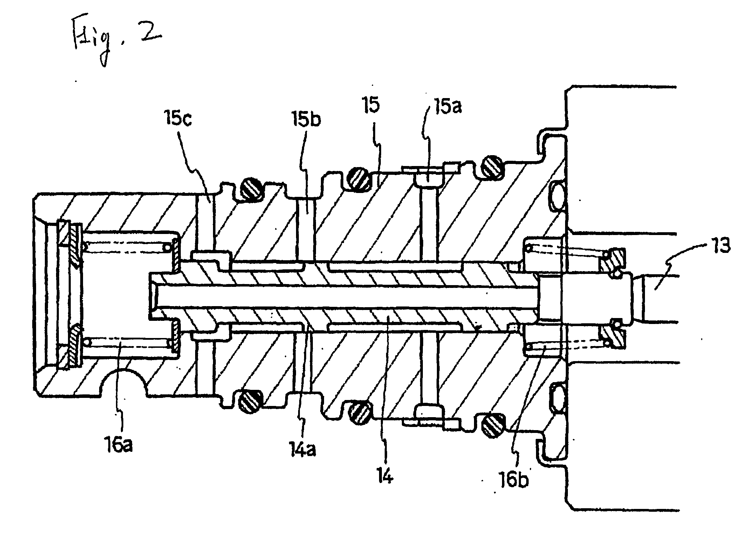

Referring next to FIGs.2 to 4 inclusive, there are illustrated three scale-upped conditions, respectively, of a principal portion of the proportional solenoid valve 10. In FIG.2 which depicts the main portion of the proportional solenoid valve 10 which is in deenergized condition, springs 16a and 16b are in balanced condition, which causes the spool 14 to place at a rightward position, with the result that a fluid communication between the outlet port 15b and a reservoir port 15c connected to the reservoir 30 is established as well as a fluid communication between an inlet port 15a and the outlet port 15b is interrupted by a land 14a of the spool 14. Under such a situation, the fluid in the pressure chamber 93 is stored in the reservoir 30 by way of a passage 18a which connects between the outlet port 15b and the pressure chamber 93, which causes the rod 92 not to push the lever 94, thereby remaining the clutch engaged.

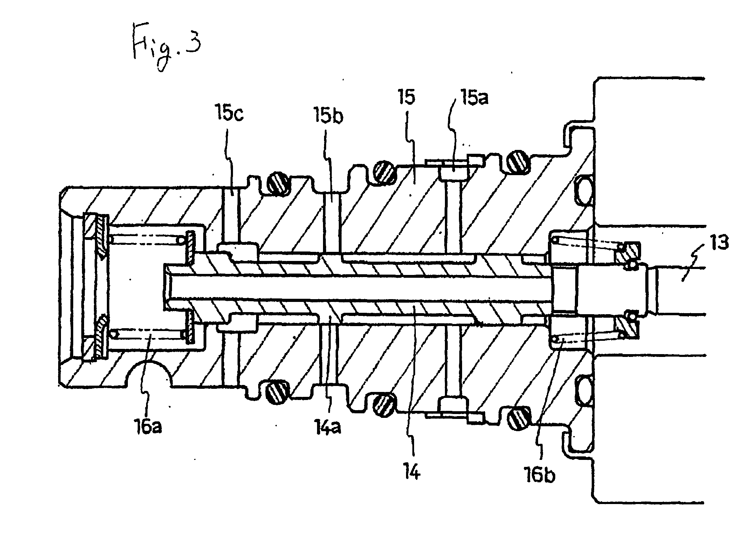

When the solenoid coil 11 of the proportional solenoid valve 10 is energized, the spool 14 is moved in the leftward direction, which causes the land 14a to isolate the inlet port 15a and the reservoir port 15c from the outlet port 15b, respectively, thereby sealing or enclosing the fluid in the pressure chamber 93 as shown in FIG.3. Under this condition, the rod 92 takes a position beyond which the lever 94 is pushed.

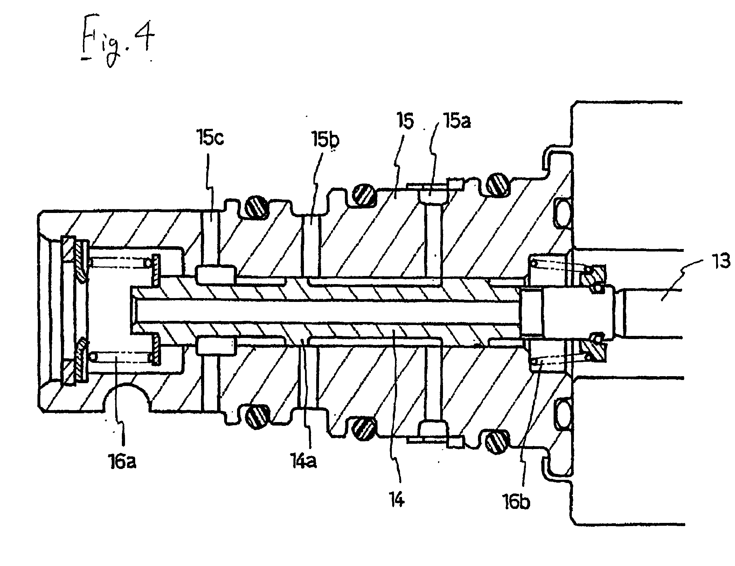

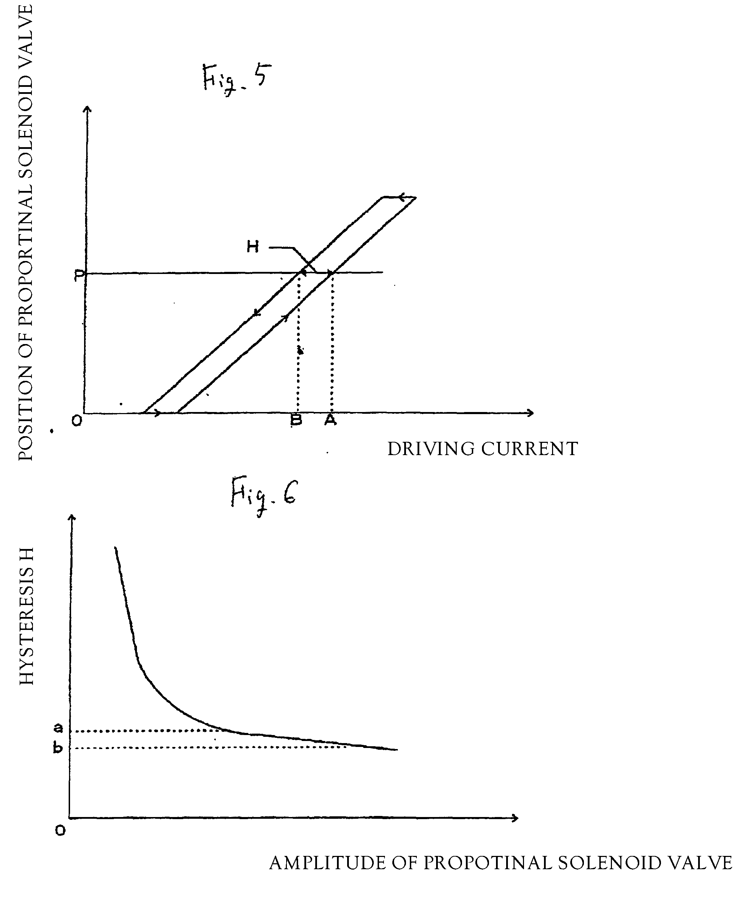

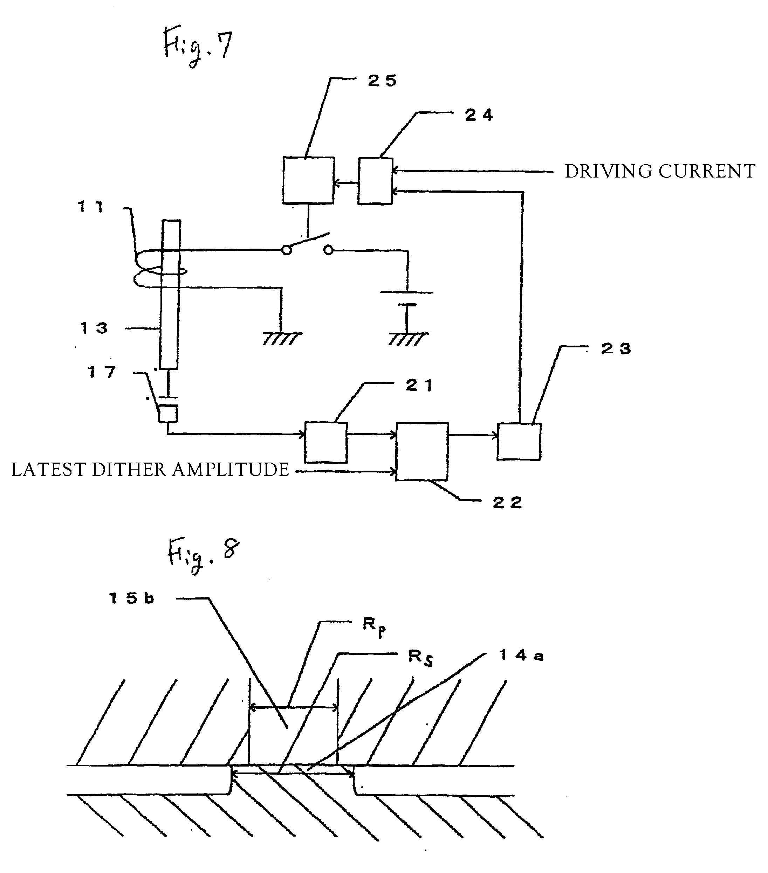

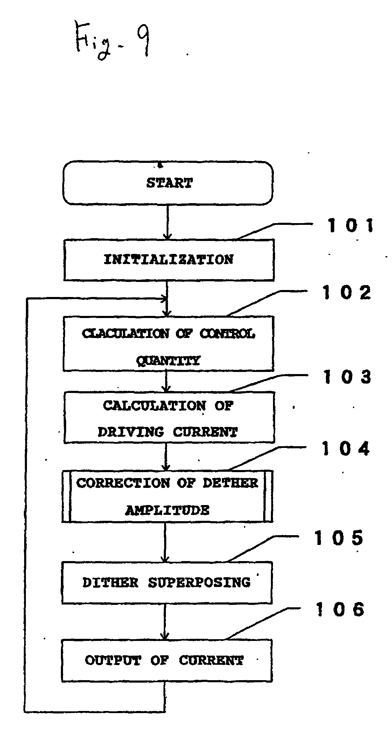

When the current applied to the solenoid coil 11 of the proportional solenoid valve 10 is further increased, the spool 14 is correspondingly moved in the leftward direction from the position depicted in FIG.3, with the result that the spool 14 takes a position as shown in FIG.4. Under the resultant condition, the land 14a of the spool 14 isolates the outlet port 15b from both of the inlet port 14a and the reservoir port 15c. Simultaneously, the fluid under pressure supplied from the motor driven pump 40 is fed by way of the inlet port 15a, the outlet port 15b, and passage 18a to the pressure chamber 93. Then, due to the more pressurized fluid in the pressure chamber 93, the piston 91 and the rod 92 move in the rightward direction, which causes the rod 94 to push the lever 94, thereby disengaging the clutch.

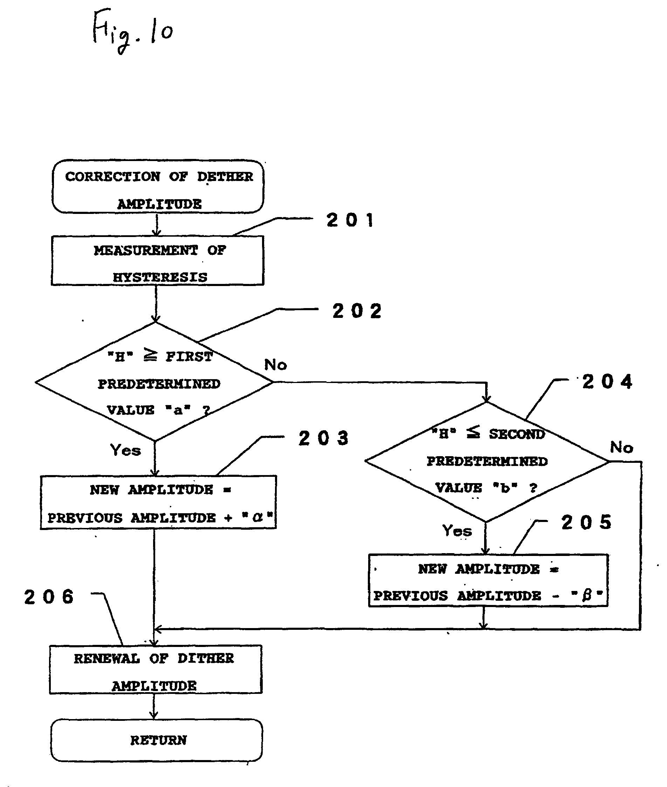

In the foregoing operations illustrated in FIGs.2 to 4 inclusive, due to a sliding friction between a movable core and a stationary core and another sliding friction between the spool 14 and the cylinder 15, the relationship between the driving current and the operating position of the spool 14 of the proportional solenoid valve 10 can be represented as a graph as shown in FIG.5. In FIG.5, "H" which indicates the width of the driving current represents the hysteresis. If such hysteresis "H" becomes large, the operation position of the proportional solenoid valve 10 relative to the amount of the driving current offsets from the designed operation position, thereby lowering the control ability or function of the proportional solenoid valve 10. Thus, to make the hysteresis "H" as small as possible, the present invention employs a dither control. In detail, superposing a dither on the driving current to be passed through the solenoid coil 11 causes the proportional solenoid valve 10 to oscillate slightly, which changes each of the friction coefficient between the movable core 12 and the stationary core and the friction coefficient between the spool 14 and the cylinder 15 from static friction coefficient to dynamic friction coefficient. Thus, the hysteresis "H" becomes smaller, with the result that the position of the proportional solenoid valve 10 relative to the driving current becomes to fall in a permissible or allowable range.

The control device 20 is inputted with an engine rotational number, a vehicle speed, an acceleration pedal depression amount, a shift lever position, a shift lever operation, and a position of the rod 92 of the clutch release cylinder. On the basis of these data, the control device 20 calculates data related to the operation of the clutch release cylinder 90 such as the position of the rod 92 and the moving speed of the rod 92. In addition, the control device 20 calculates the current to be supplied to the solenoid coil 11 of the proportional solenoid valve 10 in such a manner that the clutch release cylinder 90 operates based on the calculated conditions. Moreover, the control device 20 calculates dither amplitudes as will be detailed later by being inputted with signal from a position sensor 17 which determines the current position of the push rod 13.

The following is an explanation of correcting dither amplitudes. Referring to FIG.7, there is illustrated a schematic diagram of a dither amplitude correction portion of the control device 20. This dither amplitude correction portion is made up of a hysteresis calculation circuit 21, a dither correction circuit 22, a waveform correction circuit 23, a current generation circuit 24, and a switching circuit 25. The position of the push rod 13 which is detected by the position sensor 17 is inputted to the hysteresis calculation circuit 21 to calculate therein the hysteresis "H" as shown in FIG. 6. Then, the resultant hysteresis "H" and the amplitude of the latest or previous hysteresis are inputted into the dither correction circuit 22 and therein a correction of the dither amplitude is made in order that the magnitude of the hysteresis "H" falls in a predetermined range. The waveform correction circuit 23 receives the waveform of the resultant or corrected dither amplitude for being corrected. Thereafter, the dither having the corrected waveform is fed to the current generation circuit 24. In the current generation circuit 24, a waveform of the driving current which is generated from various data is superposed with the dither amplitude waveform. The driving current with the resultant waveform is fed to the solenoid coil 11 by way of the switching circuit 25 in such a manner that the driving current is in the form of a PWM mode when supplied to the solenoid coil 11.

A control operation of the proportional solenoid valve 10 will be described hereinafter with reference to flowcharts depicted in FIGs.9 and 10. Referring to FIG.9, there is illustrated a main routine of controlling the proportional solenoid valve 10. At step 101, an initialization is made to clear or initialize variables. At this time, the dither amplitude is determined depending on the temperature of an engine cooling water of the vehicle. Next, at step 102, the control amount or the moving amount of the rod is calculated on the basis of vehicle conditions and/or driver' s intention. At step 103, the amount of driving current to be applied to the solenoid coil 11 of the proportional solenoid valve 10 which meets with the control amount resulted at step 102. At step 104, a correction of the dither is made which is to be superposed on the driving current. At step 105, a current is generated by superposing the resultant dither on the driving current obtained at step 103 and at step 106 the resultant current is outputted to the solenoid coil 11 of the proportional solenoid valve 10.

The details of step 104 for correcting dither amplitude are explained with reference to FIG.10. At step 201, measuring the hysteresis is made by subtracting a current value "B" from a current value "A" where the currents "A" and "B" are measured at a position of the proportional solenoid coil 10 when the driving current is in increase and decrease, respectively. At step 202, it is checked whether or not the hysteresis "H" is equal to or greater than a first predetermined value "a". If the result is true, step 203 is executed to calculate a formula of new amplitude = previous ( or latest ) amplitude + "α" where "α" is a correction value. It is to be noted that at the first execution of step 203, as the previous amplitude, an initial value is used which is initialized at step 101. At step 202, if the hysteresis "H" is found to be less than the first predetermined value "a", step 204 is executed to check whether or not the hysteresis "H" is equal to or less than a second predetermined value "b". If the result is positive, step 204 is executed to calculate a formula of new amplitude = previous ( or latest ) amplitude - "β" where "**β**" is a correction value. It is to be noted that at the first execution of step 205, as the previous amplitude, an initial value is used which is initialized at step 101. At step 206, a dither amplitude renewal is made in such a manner that the previous amplitude is replaced with the latest result: one of new amplitude as the result of step 203, the new amplitude of step 205, or the false result of step 204.

In the graph shown in FIG.6 which represents a relationship between amplitude of the proportional solenoid valve 10 and hysteresis "H", the hysteresis "H" at a point on the hysteresis curve at which the tangent slope changes drastically is regarded as the minimum hysteresis which is referred as a. As shown in FIG.8 which is an enlarged version of FIG.3, the subtract of the diameter Rp of the outlet port 15b from the width Rs of the land 14a is regarded as an amplitude of the proportional solenoid valve 10. The point b on the graph shown in FIG.6 corresponds to this subtract. The hysteresis represented by this point is set to be a maximum amplitude of the proportional solenoid valve 10 at the second predetermined value "b". The second predetermined value "b" is set to be sufficient to ensure that even though a slight oscillation of the spool 14 occurs the closure of the outlet port 15b by the spool 14 remains unchanged.

In the foregoing description, the frequency of the dither amplitude waveform is assumed to be constant. However, similar dither amplitude correction is possible even if the frequency is variable, by changing the values a, b, "α", and "β".

The invention has thus been shown and description with reference to a specific embodiment, however, it should be understood that the invention is in no way limited to the details of the illustrates structures but changes and modifications may be made without departing from the scope of the appended claims.

## Claims

1. A control device (20) for a proportional solenoid valve (10) which operates depending on a driving current applied to a solenoid coil (11), the control device (20) comprising:
dither amplitude correction means (22) for correcting a dither amplitude of the driving current in such a manner that when the hysteresis is equal to or greater than a first predetermined value (a) and when the hysteresis is less than a second predetermined value (b) which is less than the first predetermined value (a), the dither amplitude is increased and decreased, respectively, from its current value;
**characterized by**
detecting means (21) for detecting a hysteresis of the proportional solenoid valve (10) during operation thereof; wherein
the first predetermined value (a) is the hysteresis when the hysteresis changes drastically relative to the amplitude of the proportional solenoid valve (10).

2. A control device (20) according to claim 1, further comprising
a spool (14) having a land (14a) and being moved in the axial direction depending on the driving current, and
a cylinder (15) being movably fitted therein with the spool (14) and having a port (15b) closed by the land (14a) when the spool (14) takes a position, wherein
the second predetermined value (b) is set to be a specific value of the hysteresis when the amplitude of the proportional solenoid valve (10) is equal to a subtract of a diameter (Rₚ) of the port (15b) from an axial length (Rₛ) of the land (14a).

## Patentansprüche

1. Steuervorrichtung (20) für ein proportionales Magnetventil (10), welches abhängig von einem an eine Magnetspule (11) angelegten Ansteuerstrom arbeitet, mit
einer Schwankungsamplituden-Korrektureinrichtung (22) zur Korrektur einer Schwankungsamplitude des Ansteuerstroms auf eine derartige Weise, dass wenn die Hysterese gleich oder größer als ein erster vorbestimmter Wert (a) ist und wenn die Hysterese geringer als ein zweiter vorbestimmter Wert (b) ist, welcher geringer als der erste vorbestimmte Wert (a) ist, die Schwankungsamplitude jeweils von ihrem gegenwärtigen Wert erhöht und vermindert wird,
**gekennzeichnet durch**
eine Erfassungseinrichtung (21) zur Erfassung einer Hysterese des proportionalen Magnetventils während seines Betriebs, wobei
der erste vorbestimmte Wert (a) die Hysterese ist, wenn sich die Hysterese relativ zu der Amplitude des proportionalen Magnetventils (10) drastisch ändert.

2. Steuervorrichtung (20) nach Anspruch 1, zudem mit
einem Kolben (14) mit einer Anschlussfläche (14a) und der abhängig von dem Ansteuerstrom in der Axialrichtung bewegt wird, und
einem Zylinder (15), in den der Kolben (14) beweglich eingepasst ist, und einen von der Anschlussfläche (14a) geschlossenen Anschluss (15b) aufweist, wenn der Kolben (14) eine Position einnimmt, wobei
der zweite vorbestimmte Wert (b) auf einen spezifischen Wert der Hysterese gesetzt wird, wenn die Amplitude des proportionalen Magnetventils (10) gleich einer Subtraktion eines Durchmessers (Rp) des Anschlusses (15b) von einer axialen Länge (Rs) der Anschlussfläche (14a) ist.

## Revendications

1. Dispositif de commande (20) pour une soupape magnétique proportionnelle (10) qui fonctionne en fonction d'un courant de commande appliqué à un solénoïde (11), dispositif de commande (20) comprenant :
des moyens de correction d'amplitude de signal de superposition (22) pour corriger une amplitude de signal de superposition du courant de commande de manière que, quand l'hystérésis est égale ou supérieure à une première valeur prédéterminée (a) et quand l'hystérésis est inférieure à une deuxième valeur prédéterminée (b) qui est inférieure à la première valeur prédéterminée (a), l'amplitude de signal de superposition soit augmentée et diminuée, respectivement, par rapport à sa valeur actuelle ;
**caractérisé par**
des moyens de détection (21) pour détecter une hystérésis de la soupape magnétique proportionnelle (10) durant le fonctionnement de celle-ci ; dans lequel
la première valeur prédéterminée (a) est l'hystérésis quand l'hystérésis varie considérablement par rapport à l'amplitude de la soupape magnétique proportionnelle (10).

2. Dispositif de commande (20) selon la revendication 1, comprenant en outre :
une bobine (14) ayant un méplat (14a) et étant déplacée dans la direction axiale en fonction du courant de commande, et
un cylindre (15) étant monté mobile par rapport à la bobine (14) et ayant un orifice (15b) fermé par le méplat (14a) quand la bobine (14) assume une position, dans lequel
la deuxième valeur prédéterminée (b) est fixée pour être une valeur spécifique de l'hystérésis quand l'amplitude de la soupape magnétique proportionnelle (10) est égale à une soustraction d'un diamètre (Rp) de l'orifice (15b) d'une longueur axiale (Rs) du méplat (14a).
